# EUROPÄISCHE PATENTSCHRIFT

(11) **EP 2 918 468 B1**
(45) Veröffentlichungstag und Bekanntmachung des Hinweises auf die Patenterteilung: **14.07.2021**
(21) Anmeldenummer: 14003894.4
(22) Anmeldetag: 19.11.2014
(51) Int. Cl.: B60W 30/14

(54) **Verfahren zur Anpassung mindestens einer Sollgeschwindigkeit einer Fahrzeuggeschwindigkeitsregelung und Fahrerassistenzsystem**
Method for adapting at least one target speed in a motor vehicle speed control and driver assistance system
Procédé d'adaptation d'au moins une vitesse de consigne d'une régulation de la vitesse d'un véhicule et système d'assistance du conducteur

(30) Priorität: 12.03.2014 DE 102014003537
(43) Veröffentlichungstag der Anmeldung: 16.09.2015
(73) Patentinhaber: MAN Truck & Bus SE, 80995 München (DE)
(72) Erfinder: Weller, Ralf, 80638 München (DE); Resch, Christoph, 80637 München (DE)
(74) Vertreter: v. Bezold & Partner Patentanwälte - PartG mbB

(56) Entgegenhaltungen:
- WO-A1-2013/151489
- WO-A1-2013/191614
- DE-A1-102006 001 818
- DE-A1-102010 005 045

## Beschreibung

Die Erfindung betrifft ein Verfahren zur Anpassung mindestens einer Sollgeschwindigkeit zur Regelung der Geschwindigkeit eines Fahrzeugs gemäß dem Oberbegriff des Patentanspruchs 1. Die Erfindung betrifft ferner ein Fahrassistenzsystem für ein Fahrzeug mit einer Geschwindigkeitsregelungseinrichtung gemäß dem Oberbegriff des Patentanspruchs 7.

Moderne, insbesondere im Fernverkehr eingesetzte Nutzfahrzeuge sind mit einer Geschwindigkeitsregelanlage ausgestattet, die zwei unabhängig voneinander arbeitende Geschwindigkeitsregler umfasst.

Ein erster Regler (auch Fahrgeschwindigkeitsregler oder Tempopilot genannt) regelt über den Antriebsstrang, beispielsweise über die Kraftstoffzufuhr im Motor, die Geschwindigkeit des Fahrzeugs auf eine erste Sollgeschwindigkeit.

Ein zweiter Regler (auch Bremsgeschwindigkeitsregler oder Bremsomat genannt) regelt über eine Bremseinrichtung des Fahrzeugs die Fahrzeuggeschwindigkeit so, dass eine zweite Sollgeschwindigkeit, die über der vorstehend genannten ersten Sollgeschwindigkeit des ersten Reglers liegt, nicht überschritten wird. Dadurch kann verhindert werden, dass Fahrzeuge, insbesondere schwere Nutzfahrzeuge, bei Fahrten auf Gefällestrecken auch ohne Kraftstoffzufuhr, d. h. im nicht befeuerten Betrieb, durch den Hangabtrieb zu weit über die Wunschgeschwindigkeit (erste Sollgeschwindigkeit) hinaus beschleunigen. Vorzugsweise stellt der Bremsgeschwindigkeitsregler das Einhalten der zweiten Sollgeschwindigkeit mittels einer verschleißfreien Dauerbremse (auch als geregelte Dauerbremse bezeichnet) sicher und nicht mittels der normalen Betriebsbremse.

Die Geschwindigkeitsregelanlage passt somit das Motormoment an, um eine vorgegebene Wunschgeschwindigkeit des Fahrers einzuhalten, oder leitet alternativ eine Bremswirkung bei Bergabfahrten ein, bei denen das Fahrzeug aufgrund seines eigenen Gewichts beschleunigt.

Die zweite Sollgeschwindigkeit der Bremsgeschwindigkeitsregelung liegt in der Regel um einen festen Wert (nachfolgend auch als Offset bezeichnet) über der Sollgeschwindigkeit der Fahrerwunschgeschwindigkeitsregelung. Dies stellt sicher, dass die beiden Regelsysteme zusammen und unabhängig voneinander arbeiten können und sich nicht gegenseitig störend beeinflussen.

Aus der Praxis ist es ferner bekannt, dass es durch den Einsatz derartiger Geschwindigkeitsregelungsanlagen im Fahrbetrieb zu ungünstigen Geschwindigkeitsverläufen, insbesondere bei längeren Bergabfahrten, kommen kann.

Bei längeren Bergabfahrten kann das Fahrzeug durch den Hangabtrieb von der ersten Sollgeschwindigkeit (Fahrerwunschgeschwindigkeit bzw. Tempopilotgeschwindigkeit) auf die zweite Sollgeschwindigkeit beschleunigt werden und auf diesen Wert durch die Bremsgeschwindigkeitsregelung eingeregelt werden, so dass sich das Fahrzeug über einen längeren Zeitraum mit einer über der Fahrerwunschgeschwindigkeit liegenden Geschwindigkeit bewegt.

Eine solche längerfristige Überschreitung der Fahrerwunschgeschwindigkeit ist aus Sicherheitsgründen unerwünscht und kann ferner zu unerwünschten Einträgen auf der sogenannten Fahrerkarte des Fahrzeugtachometers führen, falls ein Nutzfahrzeugfahrer die erste Sollgeschwindigkeit zu knapp unterhalb einer geltenden Höchstgeschwindigkeit einstellt.

Die Offenlegungsschrift WO 2013/151489 A1 schlägt zur Lösung dieses Problems ein Verfahren zur Anpassung einer Sollgeschwindigkeit zur Regelung der Geschwindigkeit eines Fahrzeugs vor. Insbesondere wird vorgeschlagen, die aktuelle Fahrzeuggeschwindigkeit zu überwachen und, falls die aktuelle Fahrzeuggeschwindigkeit länger als eine vorbestimmte Zeit über der Tempopilotgeschwindigkeit liegt, die Sollgeschwindigkeit sowohl für den Tempomat- als auch für die Bremsomatfunktion um einen vorbestimmten Betrag abzusenken. Alternativ wird vorgeschlagen, die Sollgeschwindigkeiten herabzusetzen, falls sich das Fahrzeug auf einer Gefällestrecke befindet, die länger als eine vorbestimmte Länge ist.

Nachteilig an dem bekannten Verfahren ist, dass die Topographie einer Fahrtroute nicht in ausreichendem Maße berücksichtigt werden kann. Das Herabsetzen der Sollgeschwindigkeiten erst nachdem die aktuelle Fahrgeschwindigkeit eine vorbestimmte Dauer über der Tempopilotgeschwindigkeit lag, führt beispielsweise dazu, dass die Fahrzeuggeschwindigkeit typischerweise erst gegen Ende eines Gefälles durch Herabsetzen der Sollwerte der Geschwindigkeitsregler verringert wird, so dass ein Ausnutzen der kinetischen und potentiellen Energie des Fahrzeugs am Ende von Gefällestrecken, um das Einsetzen eines Motorzugbetriebs zu verzögern, erschwert wird.

Des Weiteren kann das Herabsetzen der Sollgeschwindigkeiten bei Gefällestrecken, die länger als eine vorbestimmte Länge sind, dazu führen, dass die Fahrzeuggeschwindigkeit unnötigerweise herabgesetzt wird. Dies kann bei Strecken mit niedrigem Gefälle oder Zwischentälern der Fall sein, wenn das Fahrzeug aufgrund eines solchen Streckenverlaufs keine kritische Fahrgeschwindigkeit über einen längeren Zeitraum erreichen würde.

Die Offenlegungsschrift WO 2013/191614 A1 offenbart ein Verfahren nach dem Obergriff des Anspruchs 1.

Es ist somit eine Aufgabe der Erfindung, eine verbesserte Geschwindigkeitsregelung für ein Fahrzeug bereitzustellen, mit dem Nachteile herkömmlicher Techniken vermieden werden können. Die Aufgabe der Erfindung ist es insbesondere, ein Verfahren zur Anpassung der Sollgeschwindigkeiten einer Fahrerwunschgeschwindigkeitsregelung und einer Bremsgeschwindigkeitsregelung bereitzustellen, so dass ein längeres Überschreiten der Fahrerwunschgeschwindigkeit bei längeren Gefällestrecken vermieden werden kann. Es ist eine weitere Aufgabe, ein Fahrerassistenzsystem für ein Fahrzeug mit einer Geschwindigkeitsregelungseinrichtung bereitzustellen, mit dem Nachteile herkömmlicher Geschwindigkeitsregelungseinrichtungen vermieden werden können.

Diese Aufgaben werden durch ein Verfahren zur Anpassung mindestens einer Sollgeschwindigkeit zur Regelung der Geschwindigkeit eines Fahrzeugs und durch ein Fahrerassistenzsystem gemäß der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Das erfindungsgemäße Verfahren zur Anpassung mindestens einer Sollgeschwindigkeit zur Regelung der Geschwindigkeit eines Fahrzeugs betrifft eine Geschwindigkeitsregelung, die in Übereinstimmung mit dem Stand der Technik eine Fahrerwunschgeschwindigkeitsregelung (nachfolgend auch als Tempopilotfunktion bezeichnet) und eine Bremsgeschwindigkeitsregelung (nachfolgend auch als Bremsomatfunktion bezeichnet) umfasst.

Die Fahrerwunschgeschwindigkeitsregelung regelt über einen Antriebsstrang des Fahrzeugs eine erste Sollgeschwindigkeit vₛₒₗₗ₁ ein, wobei die erste Sollgeschwindigkeit vₛₒₗₗ₁ in Abhängigkeit von einer ausgewählten Fahrerwunschgeschwindigkeit vₜₑₘₚₒₚᵢₗₒₜ bestimmt wird.

Die Bremsgeschwindigkeitsregelung regelt über eine Bremseinrichtung des Fahrzeugs eine zweite Sollgeschwindigkeit vₛₒₗₗ₂ ein, wobei die zweite Sollgeschwindigkeit vₛₒₗₗ₂ über einen Offset-Wert Δ mit der Fahrerwunschgeschwindigkeit vₜₑₘₚₒₚᵢₗₒₜ im Zusammenhang steht.

Im normalen befeuerten Fahrbetrieb wird die erste Sollgeschwindigkeit vₛₒₗₗ₁ als Führungsgröße der Tempopilotfunktion auf den Wert der vom Fahrer eingestellten Fahrerwunschgeschwindigkeit (Tempopilotgeschwindigkeit) vₜₑₘₚₒₚᵢₗₒₜ gesetzt, d. h. vₛₒₗₗ₁ = vₜₑₘₚₒₚᵢₗₒₜ. Ferner liegt die zweite Sollgeschwindigkeit während des normalen befeuerten Betriebs um einen Offset-Wert Δ über der Fahrerwunschgeschwindigkeit, d. h. vₛₒₗₗ₂ = vₜₑₘₚₒₚᵢₗₒₜ + Δ = vₛₒₗₗ₁ + Δ.

Erfindungsgemäß kann die Sollgeschwindigkeit vₛₒₗₗ₁ der Fahrerwunschgeschwindigkeitsregelung und die Sollgeschwindigkeit vₛₒₗₗ₂ der Bremsgeschwindigkeitsregelung im Fahrbetrieb, insbesondere auf längeren Gefällestrecken, automatisch in Abhängigkeit vom Streckenverlauf angepasst werden. Dadurch kann sich auch die Höhe des Offsets ändern.

Hierzu wird verfahrensgemäß eine Topographie einer Fahrtroute in Form von Topographiedaten bereitgestellt. Anschließend wird ein Geschwindigkeitsverlauf des Fahrzeugs in Abhängigkeit von den bereitgestellten Topographiedaten für einen vorgegebenen vorausliegenden Streckenabschnitt der Fahrtroute, in Abhängigkeit von einer aktuellen Geschwindigkeit (vᵢₛₜ) des Fahrzeugs, und unter der Annahme, dass die Geschwindigkeitsregelung in Abhängigkeit der aktuell eingestellten Sollwerte der Geschwindigkeitsregler erfolgt, insbesondere unter Anwendung des im aktuellen Fahrzustand eingestellten zweiten Sollwerts, vorausberechnet. Die Vorausberechnung des Geschwindigkeitsverlaufs des Fahrzeuges erfolgt unter Verwendung eines Fahrzeugmodells, das die Fahrwiderstände des Fahrzeugs bzw. ein Beschleunigungsverhalten des Fahrzeugs im nichtbefeuerten Betrieb in Abhängigkeit von der Topographie der Fahrtroute ausgehend von der aktuellen Geschwindigkeit (vᵢₛₜ) angibt. Das hierzu verwendete Fahrzeugmodell, kann beliebig detailliert sein. Voraussetzung ist jedoch, dass die Auswirkung der Topographie, also der Steigung auf die Fahrzeugbeschleunigung separat berücksichtigt ist. Alle anderen Fahrwiderstände, wie Luftwiderstand, Rollwiderstand und Triebstrangverluste etc. können einzeln oder zusammengefasst verwendet werden. Typischerweise werden hier parametrierte Werte verwendet, welche dann über Adaptionsalgorithmen dem tatsächlichen Fahrzeugverhalten angepasst werden. Triebstrangverluste durch Nebenverbraucher werden soweit bekannt direkt berücksichtigt.

Das Fahrzeugmodell kann in Form einer Beschleunigungsfunktion oder in Form einer Kennlinie in der Geschwindigkeitsregelanlage hinterlegt sein.

Anschließend wird die zweite Sollgeschwindigkeit auf einen Wert unterhalb einer Geschwindigkeitsgrenze vₖᵣᵢₜ verringert, falls der vorausberechnete Geschwindigkeitsverlauf ergibt, dass die Fahrzeuggeschwindigkeit länger als eine vorbestimmte Zeitdauer tₘₐₓ (nachfolgend auch als Überschreitungszeitdauer tₘₐₓ bezeichnet) durchgehend über einer vorbestimmten Geschwindigkeitsgrenze vₖᵣᵢₜ liegt. Gemäß allgemeinen Gesichtspunkten der Erfindung wird somit anhand der Topographie der Fahrtroute ermittelt, ob sich bei den aktuell eingestellten Sollwerten der Geschwindigkeitsregelung ein Geschwindigkeitsverlauf entlang z. B. einer Gefällestrecke ergeben würde, bei dem die Fahrgeschwindigkeit länger als eine vorbestimmte Zeitdauer über einer kritischen Geschwindigkeit vₖᵣᵢₜ liegt. Ist dies der Fall, kann durch Verringern der zweiten Sollgeschwindigkeit auf einen Wert, der gleich oder vorzugsweise unterhalb der Geschwindigkeitsgrenze vₖᵣᵢₜ liegt, sichergestellt werden, dass eine unerwünschte längere Überhöhung der Fahrzeuggeschwindigkeit vermieden wird.

Die vorgenannte Geschwindigkeitsgrenze vₖᵣᵢₜ kann ein Geschwindigkeitswert sein, der eine relative Obergrenze zum ersten Sollwert angibt, der nicht länger als die Zeitdauer tₘₐₓ überschritten werden soll. Die Geschwindigkeitsgrenze vₖᵣᵢₜ kann auch einen absoluten Geschwindigkeitswert angeben, bei dem z. B. aufgrund gesetzlicher Vorschriften ein Eintrag auf der Fahrerkarte ausgelöst wird, falls das Nutzfahrzeug diese Geschwindigkeitsgrenze länger als eine erlaubte Zeitdauer überschreitet.

Die Verringerung der zweiten Sollgeschwindigkeit kann bei Beginn eines Gefällestreckenabschnitts erfolgen, für den vorausberechnet wurde, dass der vorausberechnete Geschwindigkeitsverlauf unter Anwendung der nicht verringerten Sollgeschwindigkeit länger als die vorbestimmte Überschreitungszeitdauer tₘₐₓ durchgehend über der Geschwindigkeitsgrenze vₖᵣᵢₜ liegt. Dies vermeidet ein zu frühzeitiges Herabsenken der Sollgeschwindigkeit auf einem Streckenabschnitt, für den keine Gefahr einer zu langandauernden Geschwindigkeitsüberhöhung besteht.

Ferner kann mit der zweiten Sollgeschwindigkeit auch die erste Sollgeschwindigkeit verringert werden. Die erfindungsgemäße Realisierung sieht hierbei vor, dass, falls der Wert der verringerten zweiten Sollgeschwindigkeit nicht mindestens um einen vorbestimmten Mindestoffset-Wert Δₘᵢₙ über der ersten Sollgeschwindigkeit liegt, die erste Sollgeschwindigkeit auf einen Wert, der mindestens um den Mindestoffset-Wert Δₘᵢₙ unterhalb der verringerten zweiten Sollgeschwindigkeit liegt, verringert wird. Der Mindestoffset-Wert Δₘᵢₙ ist in der Regel ein vorgegebener Wert, um den sich die Sollgeschwindigkeiten der Fahrerwunschgeschwindigkeitsregelung und der Bremsgeschwindigkeitsregelung unterscheiden müssen, damit sichergestellt wird, dass die beiden Regelungen nicht miteinander in Konflikt kommen. Die vorgenannte Ausführungsvariante bietet somit den Vorteil, dass die erste Sollgeschwindigkeit nur in dem Falle herabgesetzt wird, dass durch Herabsetzen der zweiten Sollgeschwindigkeit dieser Mindestoffset-Wert unterschritten wird.

Gemäß einem weiteren Aspekt umfasst das Verfahren das Bestimmen eines Umschaltzeitpunkts vor Erreichen eines Endes eines Gefällenstreckenabschnitts, derart, dass ein Zurücksetzen der zweiten Sollgeschwindigkeit auf die ursprüngliche zweite Sollgeschwindigkeit an dem Umschaltzeitpunkt einen vorausberechneten Geschwindigkeitsverlauf ergibt, bei dem die Fahrzeuggeschwindigkeit die ursprüngliche zweite Sollgeschwindigkeit erreicht und die Geschwindigkeitsgrenze nicht länger als die vorbestimmte Überschreitungsdauer tₘₐₓ überschreitet. Diese Variante bietet den Vorteil, dass eine kinetische Energie und eine potentielle Energie des Fahrzeugs genutzt werden können, um das Einsetzen eines Motorzugbetriebs zu verzögern. Mit anderen Worten wird das vorteilhafte Ausnutzen von Schwungspitzen an einem Gefälleende ermöglicht. Dies erhöht somit die Kraftstoffeffizienz des Fahrbetriebs. Gemäß einem weiteren Aspekt können die Topographiedaten von einem Navigationssystem oder von einer Topographiedaten-Speichereinrichtung bereitgestellt werden. Ferner kann die Topographie der jeweiligen Fahrtroute als relative Höheninformation oder als Steigung-Gefälle-Information gespeichert werden. Ferner kann beim Fahrbetrieb die aktuelle Fahrzeugposition und Fahrtrichtung der gespeicherten Topographie der Fahrtroute zugeordnet werden.

Gemäß einem weiteren Aspekt der Erfindung kann das Fahrzeugmodell einen Beladungszustand, ein Gesamtgewicht, eine Achslast, einen Rollreibungswiderstand, einen Strömungswiderstand des Kraftfahrzeugs und/oder einen durch eine Komponente der Antriebseinheit verursachten Verlustwiderstand der Antriebseinheit berücksichtigen. Anhand dieser Parameter kann ein Beschleunigungsverhalten des Fahrzeugs im nichtbefeuerten Betrieb, beispielsweise im Rollbetrieb oder im Schubbetrieb, berechnet werden.

Ein weiterer Aspekt der Erfindung betrifft ein Fahrerassistenzsystem für ein Fahrzeug, insbesondere für ein Nutzfahrzeug, mit einer Geschwindigkeitsregelungseinrichtung, umfassend einen Fahrerwunschgeschwindigkeitsregler, der einen Antriebsstrang des Fahrzeugs unter Verwendung einer ersten Sollgeschwindigkeit regelt, wobei die erste Sollgeschwindigkeit in Abhängigkeit von einer ausgewählten Fahrerwunschgeschwindigkeit bestimmt wird; und einen Bremsgeschwindigkeitsregler, der eine Bremseinrichtung des Fahrzeugs unter Verwendung einer zweiten Sollgeschwindigkeit regelt, wobei die zweite Sollgeschwindigkeit über einen Offset-Wert mit der Fahrerwunschgeschwindigkeit im Zusammenhang steht.

Die Geschwindigkeitsregelungseinrichtung ist ferner zur Durchführung eines Verfahrens gemäß einem der vorgenannten Aspekte eingerichtet, um eine Sollgeschwindigkeit zur Regelung der Geschwindigkeit des Fahrzeugs anzupassen. Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, betreffend die Anpassung der Sollgeschwindigkeiten, gelten somit auch für eine entsprechende Einrichtung und Ausführung einer Geschwindigkeitsregelungseinrichtung.

Ferner betrifft die Erfindung ein Fahrzeug, insbesondere ein Nutzfahrzeug, mit einem Fahrerassistenzsystem nach den vorgenannten Aspekten.

Weitere Einzelheiten und Vorteile der Erfindung werden im Folgenden unter Bezug auf die beigefügte Zeichnung beschrieben.

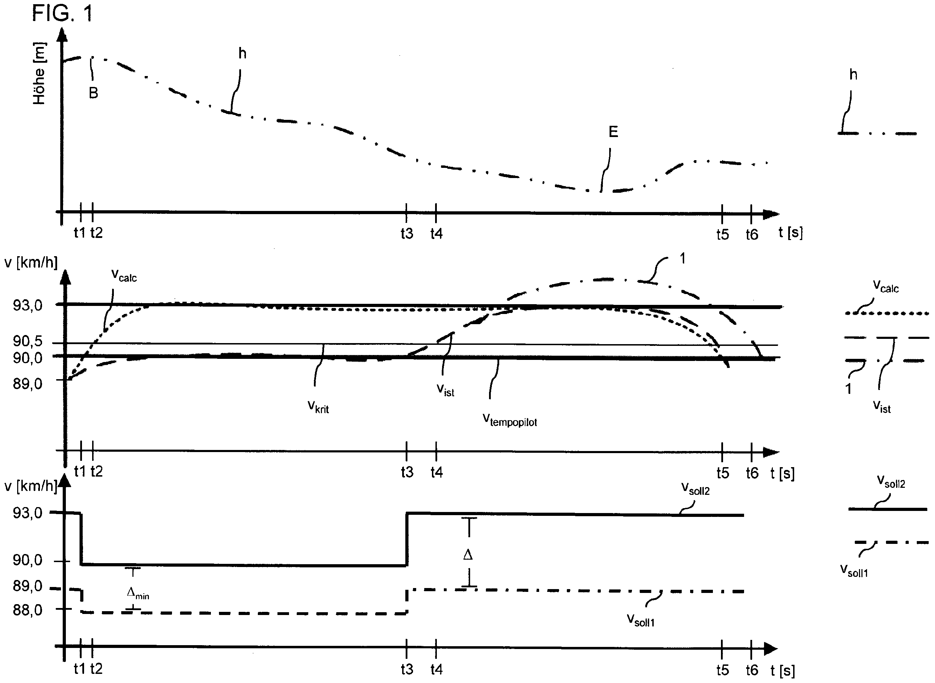

Figur 1 illustriert die Anpassung der Sollgeschwindigkeiten der Geschwindigkeitsregelung in Abhängigkeit von einer Topographie einer Fahrtroute gemäß einem Ausführungsbeispiel. Ferner illustriert Figur 1 die Auswirkung der veränderten Sollwerte auf die Fahrzeuggeschwindigkeit.

Hierbei zeigt das obere Diagramm in Figur 1 die Topographie einer Fahrtroute als relative Höhenkurve h. Der in Figur 1 gezeigte Streckenabschnitt zeigt einen Streckenabschnitt mit einer längeren Gefällestrecke. Die Gefällestrecke beginnt an der Stelle B und endet an der Stelle E.

Das untere Diagramm in Figur 1 zeigt beispielhaft einen zeitlichen Verlauf der Sollgeschwindigkeit vₛₒₗₗ₁ der Fahrerwunschgeschwindigkeitsregelung (Tempopilot bzw. Tempomatfunktion) mit der strichgepunkteten Linie. Der zeitliche Verlauf der Sollgeschwindigkeit vₛₒₗₗ₂ der Bremsgeschwindigkeitsregelung (Bremsomatfunktion) ist durch die durchgezogene Linie dargestellt.

Im normalen befeuerten Betrieb wird die erste Sollgeschwindigkeit vₛₒₗₗ₁ auf den Wert gesetzt, den der Fahrer bei der Einstellung der Temopoliotfunktion als Fahrerwunschgeschwindigkeit vₜₑₘₚₒₚᵢₗₒₜ festgelegt hat. Beispielsweise wurde im vorliegenden Beispiel durch den Fahrer die Fahrerwunschgeschwindigkeit auf 89 km/h eingestellt. Folglich ist die erste Sollgeschwindigkeit vₛₒₗₗ₁ auf den Wert 89 km/h eingestellt, wenn das Fahrzeug den Beginn B der Steigung erreicht. Die zweite Sollgeschwindigkeit vₛₒₗₗ₂ ist auf einen Wert eingestellt, der um einen Offset-Wert Δ über der ersten Sollgeschwindigkeit vₛₒₗₗ₁ liegt. Im vorliegenden Beispiel ist der Offset-Wert Δ = 4 km/h, so dass die zweite Sollgeschwindigkeit vₛₒₗₗ₂ auf den Wert 93 km/h eingestellt ist, wenn das Fahrzeug den Beginn B der Gefällestrecke erreicht.

Ein besonderer Vorzug der Erfindung liegt darin, dass die Sollgeschwindigkeiten vₛₒₗₗ₁ und vₛₒₗₗ₂ automatisch von der Geschwindigkeitsregelanlage in Abhängigkeit von der Streckentopographie der vorausliegenden Fahrtstrecke angepasst werden können. Dadurch kann der Fahrer im Fahrbetrieb von zusätzlichen Aufgaben der Längsführung des Fahrzeugs, z. B. durch eine manuelle Anpassung der Fahrerwunschgeschwindigkeit bzw. der Tempopilot-Sollgeschwindigkeit oder des Offset-Wertes, entlastet werden.

Fährt das Fahrzeug nicht auf einer Steigung, ergibt sich normalerweise ein Geschwindigkeitsverlauf mit nahezu konstanter Geschwindigkeit, da die Fahrerwunschgeschwindigkeitsregelung durch Regelung des Antriebstrangs das Motormoment so regelt, dass das Fahrzeug die konstante erste Sollgeschwindigkeit vₛₒₗₗ₁ aufweist.

Fährt das Fahrzeug jedoch auf einer Gefällestrecke, kann das Fahrzeug, insbesondere bei schweren Nutzfahrzeugen, aufgrund des Hangabtriebs auch ohne Motormoment auf eine Geschwindigkeit über der ersten Sollgeschwindigkeit vₛₒₗₗ₁ beschleunigt werden.

Die Geschwindigkeitsregelanlage ist daher eingerichtet, im Fahrbetrieb fortlaufend für einen vorausliegenden Streckenabschnitt einen Geschwindigkeitsverlauf für das Fahrzeug vorauszuberechnen.

Ein derartiges Beschleunigungsverhalten des Fahrzeugs kann anhand der Topographiedaten der Fahrtroute, einer aktuellen Geschwindigkeit vᵢₛₜ des Fahrzeugs und einem Fahrzeugmodell, das ein Beschleunigungsverhalten des Fahrzeugs im nichtbefeuerten Betrieb in Abhängigkeit von der Topographie, der Fahrtroute und der aktuellen Geschwindigkeit angibt, berechnet werden.

Ein derartiges Fahrzeugmodell kann beispielsweise einen Beladungszustand, ein Gesamtgewicht, eine Achslast, einen Rollreibungswiderstand, einen Strömungswiderstand des Fahrzeugs und/oder einen durch Komponenten der Antriebseinheit verursachten Verlustwiderstand der Antriebseinheit berücksichtigen. Derartige Fahrzeugmodelle und das Berechnen der Beschleunigung des Fahrzeugs im nicht befeuerten Betrieb auf Gefällestrecken sind an sich aus dem Stand der Technik bekannt und müssen hier nicht detaillierter beschrieben werden. Derartige Ansätze sind beispielsweise aus der DE 10 2006 001 818 A1 oder der DE 10 2010 005 045 A1 bekannt.

Ein derartiges Fahrzeugmodell kann in Form einer Berechnungsfunktion und/oder in Form von in der Geschwindigkeitsregelanlage hinterlegten Kennlinien, die in Abhängigkeit der Gefälle-/Höheinformation der Fahrtroute und in Abhängigkeit der Fahrgeschwindigkeit das Beschleunigungsverhalten des Fahrzeugs beschreiben, vorausberechnet werden.

Die Topographie einer Fahrtroute kann als Topographiedaten von einem Navigationsgerät bereitgestellt werden. Das Navigationsgerät kann ferner die aktuelle Fahrzeugposition und Fahrtrichtung bereitstellen und der gespeicherten Topographie der Fahrtroute zuordnen.

Mit dem Fahrzeugmodell kann dann vorausberechnet werden, wie sich ein vorausliegendes Gefälle auf den Geschwindigkeitsverlauf des Fahrzeugs bei gegebener Sollwerteinstellung der Tempomat- bzw. Bremsomatfunktion auswirkt. Ergibt sich aus dem berechneten Geschwindigkeitsverlauf, dass die Fahrzeuggeschwindigkeit bei gegebener Sollwerteinstellung länger als eine vorbestimmte Überschreitungsdauer tₘₐₓ durchgehend über einer vorbestimmten Geschwindigkeitsgrenze vₖᵣᵢₜ liegt, wird die Sollgeschwindigkeit auf einen Wert unterhalb der Geschwindigkeitsgrenze vₖᵣᵢ verringert.

Im vorliegendem Ausführungsbeispiel sind als Wert für die Überschreitungsdauer tₘₐₓ 30 s und für die Geschwindigkeitsgrenze vₖᵣᵢₜ 90,5 km/h gewählt, da beispielsweise ein automatischer Eintrag auf der Fahrerkarte erzeugt wird, falls das Fahrzeug länger als tₘₐₓ = 30 s über einer Geschwindigkeit von 90,5 km/h fährt.

Das mittlere Diagramm in Figur 1 zeigt einen vorausberechneten Geschwindigkeitsverlauf v_{calc} in Form der gepunkteten Kurve, basierend auf den ursprünglich eingestellten Sollwerten vₛₒₗₗ₁ = 89 km/h und vₛₒₗₗ₂ = 93 km/h. Der vorausberechnete Geschwindigkeitsverlauf v_{calc} ergibt, dass aufgrund der Beschleunigung des Fahrzeugs im Gefälle im Zeitpunkt t2 die kritische Geschwindigkeit vₖᵣᵢₜ überschritten wird und bei Erreichen des zweiten Sollwertes vₛₒₗₗ₂ von 93 km/h durch die Bremsomatfunktion auf diesem Wert konstant gehalten wird. Erst nach Durchlaufen des Endes E des Gefälles sinkt die Fahrzeuggeschwindigkeit in der anschließenden Steigung wieder und unterschreitet den Grenzwert vₖᵣᵢₜ erst wieder im Zeitpunkt t5. Die Zeitdauer (t5 - t2) des vorausberechneten Geschwindigkeitsverlauf v_{calc} wird berechnet und mit der vorbestimmten Geschwindigkeitsgrenze-Überschreitungsdauer Tₘₐₓ verglichen.

Im vorliegendem Fall ergibt sich, dass die Zeitdauer t5 - t2 > tₘₐₓ ist und somit die kritische Geschwindigkeit vₖᵣᵢₜ zu lange überschritten wird.

Folglich wird verfahrensgemäß im Zeitpunkt t1, wenn das Fahrzeug den Beginn des Gefälles erreicht, die zweite Sollgeschwindigkeit vₛₒₗₗ₂ auf einen Wert einer erlaubten Maximalgeschwindigkeit von 90 km/h oder knapp darunter herabgesetzt.

Im vorliegenden Ausführungsbeispiel liegt der vorgegebene Mindestabstand Δₘᵢₙ zwischen den beiden Sollgeschwindigkeiten der Tempomat- bzw. Bremsomatfunktion bei 2 km/h, was jedoch nur als beispielhafte Angabe zu sehen ist.

Im vorliegenden Ausführungsbeispiel wird vor Herabsetzung des zweiten Sollwerts vₛₒₗₗ₂ geprüft, ob der herabgesetzte Sollwert mindestens um den Mindestabstand Δₘᵢₙ über dem ursprünglichen Mindestsollwert vₛₒₗₗ₁ liegt. Da der zweite Sollwert auf einen Wert von 90 km/h verringert werden soll, ist dies vorliegend nicht der Fall. Folglich wird auch der erste Sollwert vₛₒₗₗ₁ auf einen Wert von 88 km/h herabgesetzt, so dass der Abstand zwischen dem veränderten ersten Sollwert und dem veränderten zweiten Sollwert mindestens so groß ist wie der festgelegte Mindestoffset-Wert Δₘᵢₙ.

Ferner besteht die Möglichkeit, den ersten Sollwert unverändert zu lassen, wenn durch die Herabsetzung des zweiten Sollwerts vₛₒₗₗ₂ der Mindestabstand Δₘᵢₙ zwischen dem ersten und dem zweiten Sollwert eingehalten wird.

Im mittleren Diagramm der Figur 1 ist die Auswirkung der herabgesetzten Sollwerte auf den Fahrzeuggeschwindigkeitsverlauf mit der gestrichelten Linie vᵢₛₜ dargestellt. Aufgrund der Herabsetzung des Sollwerts vₛₒₗₗ₂ der Bremsgeschwindigkeitsregelung auf 90 km/h steigt im Gefälle die Fahrzeuggeschwindigkeit nur bis zu dem Wert von 90 km/h an und wird bei Erreichen von 90 km/h durch die Bremsgeschwindigkeitsregelung auf diesem Wert gehalten.

Gemäß dem Verfahren wird ferner ein Umschaltzeitpunkt t3 vor Erreichen eines Endes des Gefällenstreckenabschnitts bestimmt.

Der Umschaltzeitpunkt t3 wird so berechnet, dass ein Zurücksetzen der verringerten zweiten Sollgeschwindigkeit vₛₒₗₗ₂ von 90 km/h auf die ursprüngliche zweite Sollgeschwindigkeit von 93 km/h zum Zeitpunkt t3 einen vorausberechneten Geschwindigkeitsverlauf ergibt, bei dem die Fahrzeuggeschwindigkeit die ursprüngliche zweite Sollgeschwindigkeit von 93 km/h erreicht und die Geschwindigkeitsgrenze von 90,5 km/h dabei nicht länger als die vorbestimmte Überschreitungszeitdauer tₘₐₓ überschreitet.

Für die Berechnung des Umschaltzeitpunkts t3 kann der erste Zeitpunkt bei der Fahrt durch die Gefällestrecke B-E berechnet werden, bei dem ein Zurücksetzen der verringerten zweiten Sollgeschwindigkeit vₛₒₗₗ₂ von 90 km/h auf die ursprüngliche zweite Sollgeschwindigkeit von 93 km/h an diesem Zeitpunkt einen vorausberechneten Geschwindigkeitsverlauf ergibt, bei dem die Fahrzeuggeschwindigkeit die ursprüngliche zweite Sollgeschwindigkeit, z. B. 93 km/h erreicht und die Geschwindigkeitsgrenze von 90,5 km/h dabei nicht länger als die vorbestimmte Überschreitungszeitdauer tₘₐₓ überschritten wird. Vorzugsweise wird zu diesem ersten Zeitpunkt ein Sicherheitspuffer hinzuaddiert, um den Zeitpunkt t3 festzulegen, um sicherzustellen, dass Berechnungsungenauigkeiten nicht zu einer Überschreitung der Überschreitungszeitdauer tₘₐₓ führen.

Auf diese Weise können eine kinetische und eine potentielle Energie des Fahrzeugs genutzt werden, um das Einsetzen eines Motorzugbetriebs zu verzögern. In Figur 1 ist gezeigt, dass im Zeitpunkt t3 demzufolge die zweite Sollgeschwindigkeit vₛₒₗₗ₂ und auch die erste Sollgeschwindigkeit vₛₒₗₗ₁ wieder auf ihre ursprünglichen Werte zurückgesetzt werden. Folglich beschleunigt das Fahrzeug ab dem Zeitpunkt t3 durch den Hangabtrieb wieder, bis das Fahrzeug die zweite Sollgeschwindigkeit vₛₒₗₗ₂ erreicht.

Bei Erreichen der zweiten Sollgeschwindigkeit von 93 km/h wirkt die Bremsomatfunktion aufgrund des hochgesetzten zweiten Sollwerts so auf die Fahrzeugbremse ein, dass die Fahrzeuggeschwindigkeit trotz Gefälles die Geschwindigkeit von 93 km/h nicht überschreitet.

Aufgrund der vorteilhaften Zurücksetzung der beiden Sollwerte ergibt sich somit eine kurzzeitig erhöhte Geschwindigkeit am Ende des Gefälles und erhöht somit die Kraftstoffeffizienz des Fahrzeugs, da der Zugbetrieb in der nachfolgenden Steigung erst verzögert einsetzen muss.

Gemäß einer weiteren Variante der Erfindung ist es möglich, in dem vorgenannten letzten Abschnitt vor Ende des Gefälles den Offset bzw. die Spreizung zwischen der Sollgeschwindigkeit der Bremsgeschwindigkeitsregelung und der Sollgeschwindigkeit der Fahrerwunschgeschwindigkeitsregelung zusätzlich zu erhöhen.

In diesem Fall würde sich beispielsweise ein Geschwindigkeitsverlauf gemäß der strichgepunkteten Linie 1 ergeben. Mit dieser Variante wird erst im Zeitpunkt t6 die vorgegebene Geschwindigkeitsgrenze vₖᵣᵢₜ von 90,5 km/h und kurz darauf wieder die erste zurückgesetzte Sollgeschwindigkeit erreicht, bei der der Tempopilotregler aktiv den Antriebsstrang steuert, um zu verhindern, dass die Fahrzeuggeschwindigkeit unter den ersten Sollwert vₛₒₗₗ₁ fällt. Durch zusätzliche Erhöhung der Spreizung kann somit die Wirtschaftlichkeit des Fahrbetriebs zusätzlich erhöht werden.

Obwohl die Erfindung unter Bezugnahme auf bestimmte Ausführungsbeispiele beschrieben worden ist, ist eine Vielzahl von Varianten und Abwandlungen möglich, die ebenfalls von dem Erfindungsgedanken Gebrauch machen und deshalb in den Schutzbereich fallen. Folglich soll die Erfindung nicht auf die offenbarten bestimmten Ausführungsbeispiele begrenzt sein, sondern die Erfindung soll alle Ausführungsbeispiele umfassen, die in den Bereich der beigefügten Patentansprüche fallen.

## Patentansprüche

1. Verfahren zur Anpassung mindestens einer Sollgeschwindigkeit zur Regelung der Geschwindigkeit eines Fahrzeugs, wobei die Geschwindigkeitsregelung umfasst:
eine Fahrerwunschgeschwindigkeitsregelung, die über einen Antriebstrang des Fahrzeugs eine erste Sollgeschwindigkeit (vₛₒₗₗ₁) einregelt, wobei die erste Sollgeschwindigkeit (vₛₒₗₗ₁) in Abhängigkeit von einer ausgewählten Fahrerwunschgeschwindigkeit (vₜₑₘₚₒₚᵢₗₒₜ) bestimmt wird; und
eine Bremsgeschwindigkeitsregelung, die über eine Bremseinrichtung des Fahrzeugs eine zweite Sollgeschwindigkeit (vₛₒₗₗ₂) einregelt, wobei die zweite Sollgeschwindigkeit (vₛₒₗₗ₂) über einen Offsetwert (Δ) mit der Fahrerwunschgeschwindigkeit (vₜₑₘₚₒₚᵢₗₒₜ) in Zusammenhang steht;
Bereitstellen einer Topographie einer Fahrtroute als Topographiedaten;
Vorausberechnen eines Geschwindigkeitsverlaufs des Fahrzeuges in Abhängigkeit von den Topographiedaten für einen vorgegebenen vorausliegenden Streckenabschnitt der Fahrtroute, einem Fahrwiderstand des Fahrzeugs, einer aktuellen Geschwindigkeit (vᵢₛₜ) des Fahrzeugs und der eingestellten zweiten Sollgeschwindigkeit; und
Verringern der zweiten Sollgeschwindigkeit auf einen Wert unterhalb einer vorgegebenen Geschwindigkeitsgrenze (vₖᵣᵢₜ), falls der vorausberechnete Geschwindigkeitsverlauf ergibt, dass die Fahrzeuggeschwindigkeit länger als eine vorbestimmte Überschreitungszeitdauer (tₘₐₓ) durchgehend über der Geschwindigkeitsgrenze (vₖᵣᵢₜ) liegt;
**dadurch gekennzeichnet, dass**, falls der Wert der verringerten zweiten Sollgeschwindigkeit nicht mindestens um einen vorbestimmten Mindestoffsetwert (Δₘᵢₙ) über der ersten Sollgeschwindigkeit liegt, die erste Sollgeschwindigkeit auf einen Wert, der mindestens um den Mindestoffsetwert (Δₘᵢₙ) unterhalb der verringerten zweiten Sollgeschwindigkeit liegt, verringert wird.

2. Verfahren nach Anspruch 1, **dadurch gekennzeichnet, dass** die Verringerung der zweiten Sollgeschwindigkeit bei Beginn (t₁) eines Gefällestreckenabschnitts erfolgt, für den vorausberechnet wurde, dass der vorausberechnete Geschwindigkeitsverlauf länger als die vorbestimmte Überschreitungszeitdauer (tₘₐₓ) durchgehend über der Geschwindigkeitsgrenze (Vkrit) liegt.

3. Verfahren nach einem der vorhergehenden Ansprüche, **gekennzeichnet durch** das Bestimmen eines Umschaltzeitpunkts (t₃) vor Erreichen eines Endes eines Gefällestreckenabschnitts, derart, dass ein Zurücksetzen der verringerten zweiten Sollgeschwindigkeit auf die ursprüngliche zweite Sollgeschwindigkeit an dem Umschaltzeitpunkt (t₃) einen vorausberechneten Geschwindigkeitsverlauf (vᵢₛₜ) ergibt, bei dem die Fahrzeuggeschwindigkeit die ursprüngliche zweite Sollgeschwindigkeit erreicht und die Geschwindigkeitsgrenze (vₖᵣᵢₜ) nicht länger als die vorbestimmte Überschreitungszeitdauer (tₘₐₓ) überschreitet, so dass eine kinetische Energie und eine potentielle Energie des Fahrzeugs genutzt werden, um das Einsetzen eines Motorzugbetriebs zu verzögern.

4. Verfahren nach einem der vorhergehenden Ansprüche, **dadurch gekennzeichnet, dass** die Vorausberechnung des Geschwindigkeitsverlaufs des Fahrzeuges unter Verwendung eines Fahrzeugmodells erfolgt, das ein Beschleunigungsverhalten des Fahrzeugs im nichtbefeuerten Betrieb in Abhängigkeit von der Topographie der Fahrtroute und der aktuellen Geschwindigkeit (vᵢₛₜ) angibt.

5. Verfahren nach einem der vorhergehenden Ansprüche, **dadurch gekennzeichnet,**
(a) **dass** die Topographiedaten von einem Navigationssystem oder von einer Topographiedaten-Speichereinrichtung bereitgestellt werden; und/oder
(b) **dass** die Topographie der jeweiligen Fahrtroute als relative Höheninformation oder als Steigung/Gefälle-Information gespeichert wird; und/oder
(c) **dass** beim Fahrbetrieb die aktuelle Fahrzeugposition und Fahrtrichtung der gespeicherten Topographie der Fahrtroute zugeordnet wird.

6. Verfahren nach Anspruch 4, **dadurch gekennzeichnet, dass** das Fahrzeugmodell einen Beladungszustand, ein Gesamtgewicht, eine Achslast, einen Rollreibungswiderstand, einen Strömungswiderstand des Kraftfahrzeugs und/oder einen durch Komponenten der Antriebseinheit verursachten Verlustwiderstand der Antriebseinheit berücksichtigt.

7. Fahrerassistenzsystem für ein Fahrzeug, insbesondere für ein Nutzfahrzeug, mit einer Geschwindigkeitsregelungseinrichtung, umfassend einen Fahrerwunschgeschwindigkeitsregler, der über einen Antriebstrang des Fahrzeugs eine erste Sollgeschwindigkeit (vₛₒₗₗ₁) einregelt, wobei die erste Sollgeschwindigkeit in Abhängigkeit von einer ausgewählten Fahrerwunschgeschwindigkeit (vₜₑₘₚₒₚᵢₗₒₜ) bestimmt wird; und einen Bremsgeschwindigkeitsregler, der über eine Bremseinrichtung des Fahrzeugs eine zweite Sollgeschwindigkeit (vₛₒₗₗ₂) einregelt, wobei die zweite Sollgeschwindigkeit (vₛₒₗₗ₂) über einen Offsetwert mit der Fahrerwunschgeschwindigkeit (vₜₑₘₚₒₚᵢₗₒₜ) in Zusammenhang steht;
**dadurch gekennzeichnet, dass** die Geschwindigkeitsregelungseinrichtung zur Durchführung eines Verfahrens nach einem der Ansprüche 1 bis 6 eingerichtet ist, um eine Sollgeschwindigkeit zur Regelung der Geschwindigkeit des Fahrzeugs anzupassen.

8. Fahrzeug, insbesondere Nutzfahrzeug, mit einem Fahrerassistenzsystem nach Anspruch 7.

## Claims

1. A method for adapting at least one target speed in order to control the speed of a vehicle, wherein the speed controller comprises:
a driver's request speed controller which applies a first target speed (v_{targ1}) via a drive train of the vehicle, wherein the first target speed (v_{targ1}) is determined as a function of a selected driver's request speed (vₜₑₘₚₒₚᵢₗₒₜ); and
a brake speed controller which applies a second target speed (v_{targ2}) via a brake device of the vehicle, wherein the second target speed (v_{targ2}) relates to the driver's request speed (vₜₑₘₚₒₚᵢₗₒₜ) via an offset value (Δ);
providing a topography of a route as topography data;
calculating a speed profile of the vehicle in advance in accordance with the topography data for a specified section of the route lying ahead, a driving resistance of the vehicle, a current speed (v_{act}) of the vehicle and the set second target speed; and
reducing the second target speed to a value below a specified speed limit (v_{crit}) if the speed profile which is calculated in advance reveals that the vehicle speed is continuously above the speed limit (v_{crit}) for longer than a predetermined speed-limit-exceeding period (tₘₐₓ);
**characterized in that**, if the value of the reduced second target speed is not above the first target speed at least by a predetermined minimum offset value (Δₘᵢₙ), the first target speed is reduced to a value which is below the reduced second target speed at least by the minimum offset value (Δₘᵢₙ).

2. The method according to Claim 1, **characterized in that** the reduction in the second target speed takes place at the start (t₁) of a negative gradient section of a route for which it has been calculated in advance that the speed profile which is calculated in advance is continuously above the speed limit (v_{crit}) for longer than the predetermined speed-limit-exceeding period (tₘₐₓ).

3. The method according to one of the preceding claims, **characterized by** determination of a switchover time (t₃) before reaching an end of a negative gradient section of a route in such a way that resetting of the reduced second target speed to the original second target speed at the switchover time (t₃) produces a speed profile (v_{act}) which is calculated in advance in which the vehicle speed reaches the original second target speed and does not exceed the speed limit (v_{crit}) for longer than the predetermined speed-limit-exceeding period (tₘₐₓ) so that kinetic energy and potential energy of the vehicle are used to delay the use of a traction mode.

4. The method according to one of the preceding claims, **characterized in that** the calculation in advance of the speed profile of the vehicle is carried out using a vehicle model which indicates an acceleration behaviour of the vehicle in the non-energized mode as a function of the topography of the route and of the current speed (v_{act}).

5. The method according to one of the preceding claims, **characterized**
(a) **in that** the topography data is provided by a navigation system or by a topography data storage device; and/or
(b) **in that** the topography of the respective route is stored as a relative altitude information or as positive gradient/negative gradient information; and/or
(c) **in that** in the driving mode the current vehicle position and direction of travel are assigned to the stored topography of the route.

6. The method according to Claim 4, **characterized in that** the vehicle model takes into account a loading condition, an overall weight, an axle load, a rolling friction resistance, a flow resistance of the motor vehicle and/or a loss resistance of the drive unit which is caused by components of the drive unit.

7. A driver assistance system for a vehicle, in particular for a utility vehicle, having a speed controller, comprising a driver's request speed controller which applies a first target speed (v_{targ1}) via a drive train of the vehicle, wherein the first target speed is determined as a function of a selected driver's request speed (vₜₑₘₚₒₚᵢₗₒₜ) ; and a brake speed controller which applies a second target speed (v_{targ2}) via a brake device of the vehicle, wherein the second target speed (v_{targ2}) relates to the driver's request speed (vₜₑₘₚₒₚᵢₗₒₜ) via an offset value;
**characterized in that** the speed controller is configured to carry out a method according to one of Claims 1 to 6, in order to adapt a target speed for controlling the speed of the vehicle.

8. A vehicle, in particular a utility vehicle, having a driver assistance system according to Claim 7.

## Revendications

1. Procédé d'adaptation d'au moins une vitesse de consigne pour réguler la vitesse d'un véhicule, la régulation de vitesse comprenant :
une régulation de vitesse souhaitée par le conducteur qui régule une première vitesse de consigne (Vₛₒₗₗ₁) par le biais d'une chaîne cinématique du véhicule, la première vitesse de consigne (Vₛₒₗₗ₁) étant déterminée en fonction de la vitesse sélectionnée (Vₜₑₘₚₒₚᵢₗₒₜ) souhaitée par le conducteur ; et
une régulation de vitesse de freinage qui régule une deuxième vitesse de consigne (Vₛₒₗₗ₂) par le biais d'un dispositif de freinage du véhicule, la deuxième vitesse de consigne (Vₛₒₗₗ₂) étant liée à la vitesse (Vₜₑₘₚₒₚᵢₗₒₜ) souhaitée par le conducteur par le biais d'une valeur de décalage (Δ) ;
la fourniture d'une topographie d'un itinéraire sous la forme de données topographiques ;
le calcul préalable d'un profil de vitesse du véhicule en fonction des données topographiques relatives à une portion future spécifiée de l'itinéraire, d'une résistance à la conduite du véhicule, d'une vitesse actuelle (vᵢₛₜ) du véhicule et de la deuxième vitesse de consigne réglée ; et
la réduction de la deuxième vitesse de consigne à une valeur inférieure à une limite de vitesse spécifiée (vₖᵣᵢₜ) dans le cas où le profil de vitesse calculé préalablement montre que la vitesse de véhicule est située sans interruption au-dessus de la limite de vitesse (vₖᵣᵢₜ) plus longtemps qu'une durée de dépassement prédéterminé (tₘₐₓ) ;
**caractérisé en ce que**, dans le cas où la valeur de la deuxième vitesse de consigne réduite ne dépasse pas, au moins d'une valeur de décalage minimale prédéterminée (Δₘᵢₙ), la première vitesse de consigne, la première vitesse de consigne est réduite à une valeur qui est inférieure, au moins de la valeur de décalage minimale (Δₘᵢₙ), à la deuxième vitesse de consigne réduite.

2. Procédé selon la revendication 1, **caractérisé en ce que** la réduction de la deuxième vitesse de consigne est effectuée au début (t₁) d'une portion de descente pour laquelle il a été calculé préalablement que le profil de vitesse calculé préalablement est situé sans interruption au-dessus de la limite de vitesse (vₖᵣᵢₜ) plus longtemps que la durée de dépassement prédéterminée (tₘₐₓ).

3. Procédé selon l'une des revendications précédentes, **caractérisé par** la détermination d'un instant de commutation (t₃) avant d'atteindre la fin d'une portion de descente de manière qu'une réinitialisation de la deuxième vitesse de consigne réduite à la deuxième vitesse de consigne d'origine à l'instant de commutation (t₃) donne un profil de vitesse (vᵢₛₜ) calculé préalablement, pour lequel la vitesse du véhicule atteint la deuxième vitesse de consigne d'origine et ne dépasse pas la limite de vitesse (vₖᵣᵢₜ) plus longtemps que la durée de dépassement prédéterminée (tₘₐₓ) de façon à utiliser une énergie cinétique et une énergie potentielle du véhicule pour retarder le démarrage d'un mode de fonctionnement tracteur.

4. Procédé selon l'une des revendications précédentes, **caractérisé en ce que** le calcul préalable du profil de vitesse du véhicule est effectué à l'aide d'un modèle de véhicule qui indique un comportement d'accélération du véhicule non-alimenté en fonction de la topographie de l'itinéraire et de la vitesse actuelle (vᵢₛₜ).

5. Procédé selon l'une des revendications précédentes, **caractérisé en ce que**
(a) les données topographiques sont fournies par un système de navigation ou par un dispositif de mémorisation de données topographiques ; et/ou
(b) la topographie de l'itinéraire respectif est mémorisée en tant qu'information de hauteur relative ou en tant qu'information d'inclinaison/de descente ; et/ou
(c) la position actuelle du véhicule et la direction de conduite sont associées à la topographie mémorisée de l'itinéraire pendant la conduite.

6. Procédé selon la revendication 4, **caractérisé en ce que** le modèle de véhicule prend en compte un état de charge, un poids total, une charge par essieu, une résistance au frottement de roulement, une résistance à l'écoulement du véhicule automobile et/ou une résistance à la perte de l'unité d'entraînement causée par des composants de l'unité d'entraînement.

7. Système d'assistance à la conduite d'un véhicule, en particulier d'un véhicule utilitaire, comprenant un dispositif de régulation de vitesse, comprenant un régulateur de vitesse souhaitée par le conducteur qui régule une première vitesse de consigne (Vₛₒₗₗ₁) par le biais d'une chaîne cinématique du véhicule, la première vitesse de consigne étant déterminée en fonction d'une vitesse sélectionnée (Vₜₑₘₚₒₚᵢₗₒₜ) souhaitée par le conducteur ; et un régulateur de vitesse de freinage qui régule une deuxième vitesse de consigne (Vₛₒₗₗ₂) par le biais d'un dispositif de freinage du véhicule, la deuxième vitesse de consigne (Vₛₒₗₗ₂) étant liée à la vitesse (Vₜₑₘₚₒₚᵢₗₒₜ) souhaitée par le conducteur par le biais d'une valeur de décalage ;
**caractérisé en ce que** le dispositif de régulation de vitesse est conçu pour mettre en œuvre un procédé selon l'une des revendications 1 à 6 afin d'adapter une vitesse de consigne pour réguler la vitesse du véhicule.

8. Véhicule, notamment véhicule utilitaire, comprenant un système d'assistance à la conduite selon la revendication 7.
